# EUROPEAN PATENT APPLICATION

(11) **EP 2 194 402 A1**
(43) Date of publication of application: **09.06.2010**
(21) Application number: 08275081.1
(22) Date of filing: 05.12.2008
(51) Int. Cl.: G01T 1/24

(54) **Radiation detector for detecting different types of radiation**

(71) Applicant: BAE Systems PLC, 6 Carlton Gardens London SW1Y 5AD (GB)
(72) Inventor: The designation of the inventor has not yet been filed
(74) Representative: BAE SYSTEMS plc Group IP Department

(57) **Abstract**

A radiation detector is disclosed. The detector comprises a detector element on which electrodes are formed. First and second electrodes are provided at a first surface of the detector element, and are arrranged such that, on application of an electric field between the first and second electrodes, a first detector region is formed adjacent the first surface of the detector element. A third electrode is provided on a second surface of the detector element, and is arranged such that, on application of an electric field between the first and third electrodes, a second detection region is formed between the first and second surfaces of the detector element. The first and second detection regions are differently sized for the detection of different types of radiation. Apparatus for detecting radiation, and handheld devices comprising such apparatus, are also disclosed.

## Description

This invention relates to a radiation detector. More particularly, this invention relates to a radiation detector suitable for detecting more than one type of radiation particle.

The radiation that the present invention is intended to detect comprises particles that are of atomic or sub-atomic scale, and that have sufficient energy to cause ionisation in a semiconductor. Such radiation occurs in a number of types, including alpha, beta, gamma and other energetic photons, and neutron radiation. There exist a number of applications for detectors operable to characterise a radiation field, either in terms of the flux of particles, or in terms of the energy of the particles in the radiation fields, or in terms of a combination of energy and flux. Such applications include the monitoring of radiation from nuclear reactors used in power generation, and the monitoring of radiation sources used in radiation therapies. In many of these applications, the radiation field comprises a number of different types of radiation particle, leading to problems for traditional radiation detectors such as Geiger-Müller tubes or scintillation detectors. These detectors are not capable of discriminating between different types of radiation. Moreover, such traditional detectors are not well suited to operation outside of well-controlled environments. Geiger-Müller tubes, for example, are fragile, and therefore not appropriate for all radiation monitoring applications. Scintillation detectors often require cooling in order for their sensitivity to be optimised, since their efficiency decreases as temperatures increase. Higher temperatures are likely to be encountered, for example, in the monitoring of radiation fields near nuclear reactors.

Solid state radiation detectors are also known. Such detectors generally comprise a detector element of semiconductor material to which an electric field is applied. When a particle of ionising radiation passes through a semiconductor material, it interacts with the material to generate electron-hole pairs, which separate under the influence of the applied field, thereby generating a current that can be amplified and measured by suitable electronic measuring apparatus. The magnitude of the signal can be related to the energy of the incident particle.

Higher energy radiation particles penetrate further into the detector element. Furthermore, different types of radiation particle interact differently with the semiconductor material forming the detector element: for example, gamma photons interact weakly with the semiconductor lattice in comparison to charged particles such as alpha and beta particles. Thus detectors for different types, and different energies, of radiation are differently sized. Gamma detectors are physically thicker than both alpha detectors; and whilst a gamma photon may generate a signal in an alpha detector, the signal will be small because the charge collected will be insufficient to generate a large signal. Moreover, it is likely that the gamma photon will simply pass straight through the detector, in which case either no signal will be generated, or there will not be efficient conversion of the gamma photons energy into a signal, such that it will be impossible to accurately infer the energy of the incident gamma photon.

There also exists a need for detectors operable to detect different types of radiation. Traditional detectors, such as those based on Geiger-Muller tubes are unable to discriminate between different types of radiation. Arrangements of separate detectors, with suitable filters over one of the detectors, are known, for example from International Patent Application, Publication Number WO 97/00456. However, such arrangements are not readily able to spatially map a radiation field, since the have only limited spatial resolution. Published European Patent Number 1084425 discloses a diamond radiation detector comprising an arrangement of detector elements optimised for the detection of different types of radiation, and fabricated into an integral unit. However, the necessity to fabricate a number of layers of different materials renders manufacturing of such detectors difficult. Moreover, the depths of the two layers are fixed at manufacture

It is an aim of the present invention to overcome, or at least partially mitigate, the above-mentioned problems. It is a further aim of the present invention to provide a radiation detector operable to discriminate between different types of incident radiation.

In accordance with a first aspect of the present invention, there is provided a radiation detector comprising: a detector element; first and second electrodes at a first surface of the detector element, the first and second electrodes being arranged such that, on application of an electric field between the first and second electrodes, a first detection region is formed adjacent the first surface of the detector element; and a third electrode at a second surface of the detector element, the third electrode being arranged such that, on application of an electric field between the first and third electrodes, a second detection region is formed between the first and second surfaces of the detector element; wherein the first and second detection regions are differently sized for the detection of different types of radiation. In contrast with prior-known radiation detectors, radiation detectors in accordance with the first aspect of the present invention are able to detect different types of radiation in the same detector element because of the provision of a number of detection regions. Conveniently, the first and second surfaces may be opposing surfaces of the detector element.

The detector may further comprise first amplifying means connected between the first and second electrodes and arranged to amplify a signal generated by the passage of radiation through the first detection region; and second amplifying means connected between the first and third electrodes and arranged to amplify a signal generated by the passage of radiation through the second detection region.

In one embodiment, the first and second electrodes each comprise a plurality of electrically connected elongate elements. In an alternative embodiment, the first and second electrodes each comprise a plurality of elongate elements, and amplifying means are connected between pairs of elongate elements, each pair comprising one elongate element of the first electrode, and one elongate element of the second electrode. In this way, the detector can achieve increased spatial resolution. It is convenient for the elongate elements of the first electrode to be interdigitated with the elongate elements of the second electrode.

The first detection region may be arranged to detect alpha particles. This may be achieved by selecting the depth of the first detection region beneath the first surface of the detector element to be approximately the same as the maximum expected penetration depth for alpha particles. Advantageously, the depth of the first detection region can be controlled to an extent by selecting the electric field to applied between the first and second electrodes: the larger the field, the further the first detection region will extend into the detector element. Such variation is not possible in prior known radiation detectors, such as that disclosed by Published European Patent Number 1084425. The depth of the first detection region can also be controlled to an extent by selecting, at manufacture of the detector, the depth to which the first and second electrodes extend from the first surface of the detector element into the detector element. It is currently considered preferable for the first and second electrodes to extend into the detector element to a depth in the range between 5 µm and 50 µm from the first surface. In one embodiment, the first and second electrodes extend to a depth of 12 µm from the first surface. The second detection region may be arranged to detect beta particles, or ionising photons. It is currently considered preferable for the second detection region to be of thickness in the range between 1 mm and 10mm. In one embodiment, the second detection region is of thickness 4 mm.

The first surface of the detector element may be covered by a converter layer such that the radiation detector is operable to detect neutrons. The converter layer comprises nuclei that interact more strongly with neutrons to generate secondary radiation, which is then detected by the detector element. The converter layer may comprise ⁶Li, an isotope of lithium having atomic mass 6. Alternatively, any other ions having nuclei that interact strongly with neutrons, such as ¹⁰B, an isotope of boron having atomic mass 10, may be used in the converter layer.

The first and second electrodes may be recessed into the first surface of the detector element, as for example may be achieved by forming the first and second electrodes by ion beam implantation. In this way, the first surface of the detector remains flat, and the resilience of the detector to surface abrasion is increased in comparison to detectors in which metal films are used to provide the electrodes.

The detector element may comprise a wide bandgap semiconductor, for example diamond material. Wide bandgap semiconductors, in this context, will be understood to mean those in which the gap between the valence band and the conduction band is greater than that in gallium arsenide. At room temperature (300 K), the gallium arsenide bandgap is 1.42 electron volts. Where diamond is used for the detector element, the first and second electrodes may conveniently comprise boron-doped diamond material.

The invention extends to apparatus for detecting radiation, comprising a radiation detector as claimed in any preceding claim, a power source operable to supply a bias voltage to the first and third electrodes, a processor operable to process signals generated in the radiation detector, and a display operable in combination with the processor to display, to a user, characteristics of a radiation field. The invention further extends to a handheld device comprising such apparatus.

Preferred embodiments of the invention will now be described by way of example only, and with reference to the accompanying Figures, in which:
Figure 1 is a cross-sectional view of a detector in accordance with a first embodiment of the invention;
Figure 2 is a plan view of a detector in accordance with the first embodiment of the invention;
Figure 3 is a schematic cross-sectional view of an portion of the first embodiment of the invention, showing the electric field generated between electrodes on a first surface of the detector when an external bias voltage is applied;
Figure 4 is a cross-sectional view of a detector in accordance with a second embodiment of the invention; and
Figure 5 is a cross-sectional view of a detector in accordance with a third embodiment of the invention.

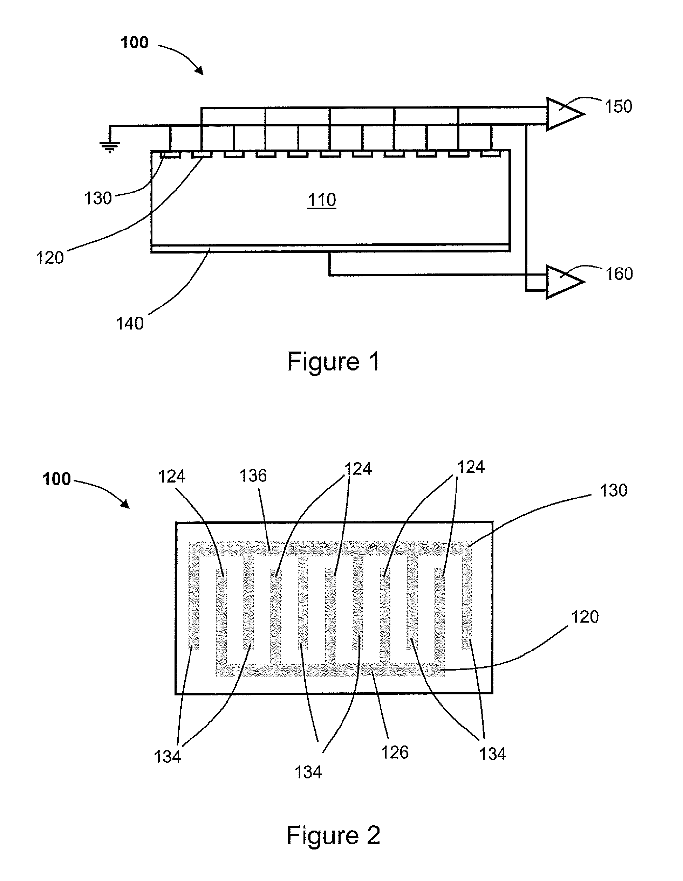

Referring to Figure 1 and Figure 2, there is shown a radiation detector 100 in accordance with a first embodiment of the present invention. Radiation detector 100 comprises a semiconductor detector element 110 on which are formed electrodes 120, 130, and 140. Semiconductor detector element 110 is a single crystal intrinsic diamond, formed by chemical vapour deposition (CVD). Suitable wafers of CVD-formed diamond are commercially available, for example from Element Six Ltd, of Kings Ride Park, Ascot, Berkshire, SL5 8BP, United Kingdom. In the present embodiment detector element 110 is 4 mm thick. First and second electrodes 120 and 130 are formed on a first, upper surface of the detector element 10, as is seen most clearly in Figure 2. Electrode 120 comprises five elongate members 124, which members 124 are electrically connected by bar 126. Electrode 130 comprises six elongate members 134, which members 134 are electrically connected by bar 136. The elongate members 124 of the first electrode 120 are interdigitated with the elongate members 134 of the second electrode 130. The third electrode 140 is formed on a second, lower surface of the detector element 110.

Electrodes 120 and 130 are recessed into the surface of the detector element 110, so that the first, upper surface of the detector element is a flat surface. Electrodes 120 and 130 extend into the diamond detector element 110 by 12 µm, have a width of 10 µm, and are separated by 50 µm, and comprise boron-doped diamond material formed by ion beam implantation of boron into the diamond detector element 110. Boron-doped diamond is a sufficiently good conductor to act as the electrode material for the first and second electrodes, having a typical conductivity or order 10⁻⁴ Scm⁻¹. The third electrode 140 also comprises boron-doped diamond that is formed during the fabrication of the diamond detector element 110. Conveniently, the boron-doped diamond third electrode provides a good substrate on which to continue growth of high quality intrinsic diamond to provide the detector element 110.

Amplifier 150 is connected between electrodes 120 and 130, and amplifier 160 is connected between electrodes 130 and 140. In use of the radiation detector, bias voltages are applied to electrodes 120 and 140, and electrode 130 is connected to ground. Thus, electric fields are present between the electrodes 120 and 130, and between the electrodes 130 and 140. In use of the present embodiment, 200 V is applied to electrode 120, 1000 V is applied to electrode 140, and electrode 130 is held at 0 V in order to create these electric fields. The regions in which these fields are present function as detection regions, in which electron-hole pairs created by the passage of ionising radiation through the detector element separate under the influence of the electric field. It will be seen that a first detection region is formed between the interdigitated elongate elements of electrodes 120 and 130, and that a second detection region is formed between the electrodes 130 and 140, extending through the full thickness of the detector element 110.

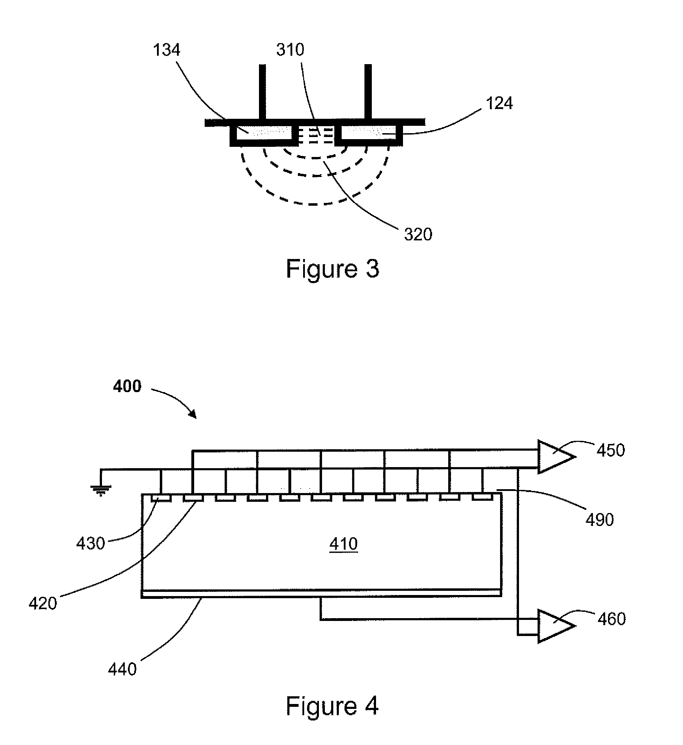

The depth of the first detection region can be controlled at manufacture by selection of the depth to which electrodes 120 and 130 extend into the surface of the detector element 110, and, in use of the radiation detector, by selection of the magnitude of the bias voltage applied to electrode 120: the larger the bias voltage, the further the electric field will penetrate into the detector element 110. Variation of the depth of the first detection region enables the maximum detectable energy to be varied. The form of the electric field between two elongate elements of electrodes 120 and 130 is shown schematically in Figure 3. A relatively uniform field is present in region 310 between defined in the volume of the detector element 110 between the elongate elements 124 and 134. Beneath this region, the strength of the electric field diminishes in region 320. The size of region 320 can be increased by increasing the magnitude of the electric field between the elongate elements 120 and 130. In the present embodiment, the first detection region extends to approximately 20 µm beneath the surface of the detector element. The depth of the second detection region can be determined at manufacture by selection of the size of the detector element 110.

Particles such as alpha particles will penetrate the detector element to only a shallow depth. In the case of alpha particles having energy of order 10 MeV, it is expected that the depth of penetration will be of order 10 µm to 20 µm. Thus, in a region of depth approximately 10 µm to 20 µm, the alpha particles will create a number of electron-hole pairs. These electron-hole pairs will separate under the influence of the electric field applied in the first detection region. Thus the alpha particles impinging on the upper surface of the detector element, that are likely to be stopped within the first detection region, will generate a signal between electrodes 120 and 130, that will be amplified by amplifier 150. In the present embodiment, the first detection region is selected to be 20 µm deep by fabrication of electrodes that extend 12 µm into the detector element, and application of a 200 V bias voltage.

Gamma photons are less strongly ionising than alpha particles, since they do not carry an electric charge. Gamma photons therefore penetrate more deeply into the detector element 110, and their passage through the detector element results in the creation of electron-hole pairs throughout the thickness of the detector element 110, with only a smaller number of electron-hole pairs being generated in the first detection region between electrodes 120 and 130. These electron hole pairs are separated in the bulk of the detector element 110, in the second detection region, and generate a signal between electrodes 120 and 140. A signal may also be generated as a result of interactions with the diamond material in the first detection region, but this signal will be negligibly small in comparison to that generated in the much larger second detection region. In the present embodiment, the second detection region, which extends through the full thickness of the detector element, is 4 mm thick.

The detector 100 is therefore able to detect different types of radiation. It is able to detect both alpha particles, and gamma radiation.

A detector 400 in accordance with a second embodiment of the invention is illustrated in Figure 4, adapted so as to be operable to detect neutrons. Detector 400 is similar to detector 100 except in that it comprises an additional neutron convertor layer 490 that covers the first, upper surface of detector 400. Other components of the detector 400, that are identical to those described above with reference to the first embodiment of the invention, are not described further, but are labelled in Figure 4 with reference numerals similar to those used in Figures 1 and 2, but incremented by three hundred. Since neutrons do not interact strongly with diamond, a neutron convertor layer 490, which comprises a material that interacts strongly with neutrons to generate secondary radiation, is applied to the upper surface of the detector 400. The secondary radiation is then detected by detector 400. In the second embodiment of the invention, the neutron converter layer is a ⁶Li₂O₃ layer. Neutrons interact with ⁶Li nuclei to generate alpha particles and tritium ions, which then pass into the diamond detector element 410. The alpha particles and tritium ions interact strongly with the diamond detector element, and are detected in the first detection region. The second detection region can be used in the same way as described above with reference to the first embodiment of the invention.

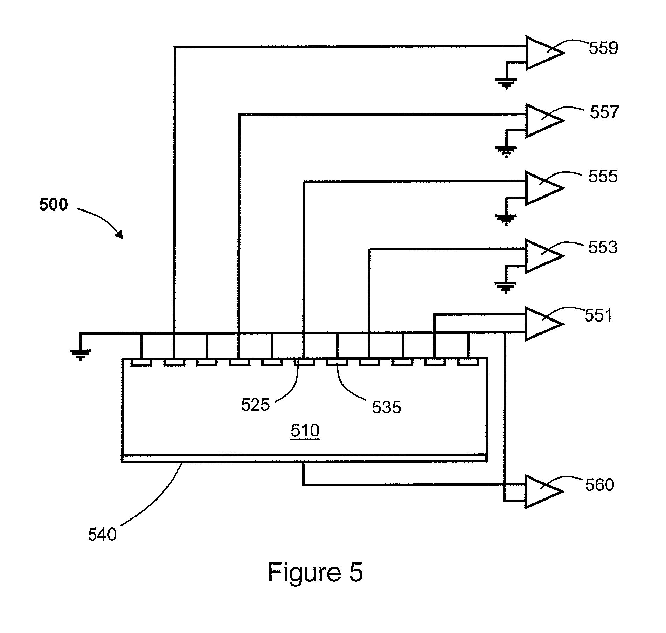

A radiation detector 500 in accordance with a third embodiment of the invention is illustrated in Figure 5. The radiation detector 500 is similar to the detector 100 described above, except in that more electrodes are arranged on the first, upper surface of the detector element 510 in order to provide a improved spatial resolution to the detector. Figure 5 illustrates detector 500 in cross-section, and shows eleven electrodes recessed into the upper surface of the detector element 510, such as exemplary electrodes 525 and 535. Each electrode is of elongate form, and alternate electrodes are connected to ground, or to a biasing voltage source.

Amplifiers 551, 553, 555, 557, and 559 are arranged to amplify signals resulting from the incidence of ionising radiation on a particular part of the upper surface of detector element 510. Each amplifier is connected between ground and an electrode connected to the biasing voltage source. In this way, an alpha particle incident on the surface of the detector between the electrodes 525 and 535 will generate a signal at amplifier 555, but will not generate any significant signal at amplifiers 551, 553, 557, and 559. Thus detector 500 has improved spatial resolution in comparison to detector 100. Other features of the detector 500 are the same as those of detector 100, and are not described further.

Having described various specific embodiments of the invention in detail, it is to be noted that these embodiments are in all respects exemplary. Variations and modifications of the above described embodiments are possible without departing from the scope of the invention, which is defined in the accompanying claims. For example, whilst, in the above, it has been described to use single crystal CVD diamond for the detector element, those skilled in the art will immediately appreciate that any wide semiconductor material, although preferably a wide bandgap semiconductor material such as silicon carbide or gallium nitride, could be used to provide the detector element. It will also be appreciated that polycrystalline CVD diamond could be used to provide the detector element. Furthermore, those skilled in the art will immediately recognise that, where different materials are used for the detector element, it will be necessary to appropriately alter the voltages applied to the electrodes in order to maintain an appropriate depletion depth.

It will also be understood that, whilst, in the above, it has been described to use boron-doped diamond to provide the electrodes, many other techniques and materials can be used to provide conducting regions for the electrodes. For example, in dependence on the semiconductor material used for the detector element, other doping elements may be preferable. Where, for example, gallium nitride or silicon carbide are used to provide the detector element, the electrodes may be formed as pn junction structures. Alternatively, ohmic contacts or Schottky contacts can be used for the first and second electrodes on the upper surface of the detector element of the above-described embodiments. Such contacts may be fabricated using titanium, platinum or gold by deposition in the appropriate configuration followed by heating to cause a solid state reaction between the metal and the semiconductor.

The size of the upper electrodes may also be varied: for example, in the above described embodiments, the width and separation of the electrodes could be varied between 1 µm and 100 µm; whilst the depth of the electrodes can be varied in dependence on the desired size of the first detection region by variation of the energy used in the ion beam implantation process used to fabricate the electrodes. As those skilled in the art will appreciate, a large number of sizes, shapes and configurations are possible for the upper electrodes, although it will be noted that it is preferable that the area occupied is kept low, since any area taken up by the electrodes will reduce the sensitive volume of the first detection region. Voltages applied to the electrodes may also be varied: for example, voltages of 100 V and 500 V may be applied to the first and third electrodes. It is preferred that the electric field present in the detection regions be between 1 kVcm⁻¹ and 1000 kVcm⁻¹; although the skilled reader will appreciate that fields of up to 1 MVcm⁻¹ (the breakdown voltage of diamond) may be applied where the detector element is fabricated from diamond.

The lower electrode may also be formed using a variety of different dopant ions. As those skilled in the art will appreciate, formation of a high quality semiconductor detector element requires the presence of a suitable substrate. For example, where silicon carbide is used to provide the detector element, a conductive substrate would be used, and a silicon carbide layer fabricated on the substrate by epitaxial growth. The substrate itself can then be used to provide the third contact, possibly after sintering. Insulating substrates may also be used. For example, gallium nitride, commonly grown on insulating sapphire, can be used as the detector element. In such cases, the third electrode is formed in an etched feature fabricated after the growth of the detector element such that the electrical characteristics of the substrate to not detrimentally affect the charge collection efficiency of the detector. It will also be appreciated that it may be desirable to incorporate additional functionality into the detector, for example by including a temperature sensor in a packaged detector. It is anticipated that, where the detector is to be used in environments where the temperature may vary significantly, it will be advantageous to incorporate a temperature sensor in order that changes in the response of the detector that occur as a result of changing temperature can be accounted for.

Finally, it is to be noted that any feature described above in relation to any one embodiment may be used alone, or in combination with other features described, and may also be used in combination with one or more features of any other of the embodiments, or any combination of any other of the embodiments.

## Claims

1. A radiation detector comprising:
(a) a detector element;
(b) first and second electrodes at a first surface of the detector element, the first and second electrodes being arranged such that, on application of an electric field between the first and second electrodes, a first detection region is formed adjacent the first surface of the detector element; and
(c) a third electrode at a second surface of the detector element, the third electrode being arranged such that, on application of an electric field between the first and third electrodes, a second detection region is formed between the first and second surfaces of the detector element;
wherein the first and second detection regions are differently sized for the detection of different types of radiation.

2. A radiation detector as claimed in claim 1, further comprising first amplifying means connected between the first and second electrodes and arranged to amplify a signal generated by the passage of radiation through the first detection region; and second amplifying means connected between the first and third electrodes and arranged to amplify a signal generated by the passage of radiation through the second detection region.

3. A radiation detector as claimed in claim 1 or claim 2, wherein the first and second electrodes each comprise a plurality of electrically connected elongate elements.

4. A radiation detector as claimed in claim 3, wherein the elongate elements of the first electrode are interdigitated with the elongate elements of the second electrode.

5. A radiation detector as claimed in claim 1, wherein the first electrode is one of a first set of electrodes, and wherein the second electrode is one of a second set of electrodes; the first and second sets of electrodes being arranged on the first surface of the detector element such that an electrodes of the first set alternate with electrodes of the second set; such that, on application of an electric field between the first set of electrodes and the second set of electrodes, a plurality of detection regions are formed between adjacent electrodes.

6. A radiation detector as claimed in claim 5, further comprising a set of amplifiers, each amplifier being connected one of the first set of electrodes and one of the second set of electrodes.

7. A radiation detector as claimed in any preceding claim, wherein the first detection region is arranged to detect alpha particles.

8. A radiation detector as claimed in any preceding claim, wherein the second detection region is arranged to detect beta particles.

9. A radiation detector as claimed in any preceding claim, wherein the second detection region is arranged to detect ionising photons.

10. A radiation detector as claimed in any preceding claim, wherein the first surface is covered by a converter layer such that the radiation detector is operable to detect neutrons.

11. A radiation detector as claimed in claim 10, wherein the converter layer comprises ⁶Li.

12. A radiation detector as claimed in any preceding claim, wherein the first and second electrodes are recessed into the first surface of the detector element.

13. A radiation detector as claimed in any preceding claim, wherein the detector element comprises a wide bandgap semiconductor.

14. A radiation detector as claimed in any preceding claim, wherein the detector element comprises diamond material, and wherein the first and second electrodes comprise boron-doped diamond material.

15. Apparatus for detecting radiation, comprising a radiation detector as claimed in any preceding claim, a power source operable to supply a bias voltage to the first and third electrodes, a processor operable to process signals generated in the radiation detector, and a display operable in combination with the processor to display, to a user, characteristics of a radiation field.
